# EUROPÄISCHE PATENTSCHRIFT

(11) **EP 0 675 183 B1**
(45) Veröffentlichungstag und Bekanntmachung des Hinweises auf die Patenterteilung: **27.08.1997**
(21) Anmeldenummer: 94105055.1
(22) Anmeldetag: 30.03.1994
(51) Int. Cl.: C09J 5/00, C09J 7/02, D06N 7/00, D06M 17/00

(54) **Verfahren zum rasterförmigen Beschichten von Flächengebilden mit Schmelzklebern**
Process for patterned coating of flexible sheets with hot-melt adhesives
Procédé pour le revêtement sous forme de trames de surfaces flexibles avec colles fusibles

(43) Veröffentlichungstag der Anmeldung: 04.10.1995
(73) Patentinhaber: KUFNER TEXTILWERKE GmbH, D-81311 München (DE)
(72) Erfinder: Hefele, Josef, Dr., D-82166 Gräfelfing (DE)
(74) Vertreter: Hansen, Bernd, Dr. Dipl.-Chem.

(56) Entgegenhaltungen:
- EP-A- 0 238 014
- EP-A- 0 481 109
- DE-A- 3 330 866

## Beschreibung

Diese Erfindung betrifft ein Verfahren zum rasterförmigen Beschichten von Flächengebilden, insbesondere Einlagestoffen für Oberbekleidungen, mit Schmelzklebern durch Auftragen des Schmelzklebers auf einen Zwischenträger und Übertragen des Schmelzklebers von diesem Zwischenträger auf den Endträger, unter Erhalt des beschichteten Flächengebildes. Diese Erfindung betrifft auch ein solches beschichteten Flächengebilde und die besonders günstige Verwendung davon.

Rasterförmig ausgeführte Beschichtungsverfahren mit Schmelzklebern, die nennenswerte Bedeutung erlangt haben, sind im "Handbuch der textilen Fixiereinlagen" von Prof. Dr. Sroka, 3. erweiterte Auflage 1993, Hartung-Gorre Verlag, Konstanz, beschrieben worden. Es sind dies das Pulver- und Pastensiebdruckverfahren unter Verwendung von Siebrundschablonen, das Pulverpunkt-Tiefdruckverfahren mit Gravurwalzen, verschiedene Doppelbeschichtungsverfahren, zwei Hotmelt-Verfahren im Tief- und Siebdruck und schließlich drei Transferverfahren.

Bei den Transferverfahren erfolgt die Beschichtung auf einen band- oder walzenförmigen Zwischenträger, von dem sie schließlich auf den eigentlichen Endträger, das Flächengebilde, übertragen wird. Der Vorteil der Transferverfahren liegt gegenüber den zuvor genannten Beschichtungsverfahren darin, daß jeder Rasterpunkt immer exakt die gleiche Größe und Ausbildung hat, während dies bei den Direktbeschichtungen nur dann der Fall ist, wenn die Trägerfläche geschlossen und ziemlich glatt ist. Auch erlaubt die Beschichtung durch das Transferverfahren, die Temperaturbeanspruchung des Endträgers auf niedrigem Niveau zu halten, wodurch die Weichheit und Fülle der Fixierung gefördert wird.

Bei allen drei bekannt gewordenen Transferverfahren weist der übertragene Schmelzkleberpunkt eine dünne, breit gewalzte Plättchenform auf, da ein verhältnismäßig hoher Preßdruck zum Übertragen des zähviskosen Schmelzklebers vom Zwischenträger auf den Endträger angewandt werden muß. Eine solche Plättchenform ist bisher nicht vermeidbar. Der Schmelzkleber dringt bei diesem Verfahren nur wenig in den Endträger, d.h. das Flächengebilde, ein. Auch beim Fixieren ist die Penetration gering, so daß Rück- und/oder Durchschlag des Schmelzklebers durch das Flächengebilde vermindert werden können. Jedoch ist eine vollständige Verhinderung des Rückschlages dabei bisher noch nicht gelungen. Nachteilig ist zudem, daß gleichzeitig eine Einbuße von Haftung, Wasch- und Chemischreinigungssicherheit wegen der stark abgeflachten Plättchenform nicht vermeidbar ist. Bisher ist es nicht gelungen, einen Einlagestoff nach einem Transfer-Verfahren zur Verfügung zu stellen, der keine Rückschlagsneigung aufzeigt und der gleichzeitig eine hohe Haftung, Wasch- und Chemischreinigungsfestigkeit der damit erzeugten Verbundstoffe aufweist.

Daher liegt dieser Erfindung die Aufgabe zugrunde, ein Verfahren zum rasterförmigen Beschichten von Flächengebilden anzugeben, das die bisherigen Vorteile des Transferverfahrens beibehält und die oben angesprochenen Nachteile beseitigt. Außerdem soll ein Flächengebilde angegeben werden, das bei Verwendung als Einlagestoff nicht die oben angesprochenen Nachteile aufweist.

Zur Lösung dieser Aufgabe wird erfindungsgemäß ein Verfahren zum rasterförmigen Beschichten von Flächengebilden mit Schmelzklebern der eingangs genannten Art angegeben, wobei das Verfahren dadurch gekennzeichnet ist, daß der Raster einer schmelzkleberhaltigen Schicht auf dem Zwischenträger mit einer darauf aufgesetzten weiteren Schicht versehen wird, die die Haftung zum Endträger, d.h. dem Flächengebilde, bewirkt, wobei die weitere Schicht nur auf die Kuppen der schmelzkleberhaltigen Punkte aufgebracht wird und wobei als weitere Schicht (8) ein Film aus einer Dispersion oder einer Lösung eines Kunststoffes oder Harzes, der bzw. das bei Fixierbedingungen nicht mehr thermoaktivierbar ist, oder eine Lösung oder Dispersion verwendet wird, die unter Fertigungsbedingungen nicht kondensiert oder vernetzt, aber beim Fixieren der beschichteten Flächengebilde keine nennenswerte Fließeigenschaften mehr zeigen.

Besonders vorteilhafte Ausgestaltungen des erfindungsgemäßen Verfahrens sind Gegenstand der Ansprüche 2 bis 17.

Überraschenderweise hat sich herausgestellt, daß die Vorteile des bekannten Transferverfahrens beibehalten und gleichzeitig die angesprochenen Nachteile vermieden werden können, wenn die auf einem Zwischenträger aufgebrachte rasterförmige schmelzkleberhaltige Schicht mit einer weiteren Schicht durch Eintauchen des Rasters in einen fließfähigen Film benetzt wird. Diese benetzte schmelzkleberhaltige Schicht wird nach Trocknung in einem weiteren Verfahrensschritt von dem Zwischenträger auf den Endträger, nämlich das Flächengebilde, übertragen, und anschließend wird der Zwischenträger, der keinen Schmelzkleber mehr aufweist, von dem Endträger abgezogen. Es wird dadurch ein Flächengebilde erhalten, bei dem die in den Film eingetauchte und benetzte schmelzkleberhaltige Schicht eine Struktur mit einer weiteren Schicht in unveränderter Rasterform annimmt.

Die auf dem Schmelzkleber aufsitzende weitere Schicht liegt nach der Übertragung auf dem Endträger zwischen dem Schmelzkleber und dem Endträger, wodurch beim Auffixieren des Endträgers auf Oberstoffe eine Sperrwirkung unter Vermeidung eines Rückschlages durch den Endträger erzielt und stattdessen der Schmelzkleber gezwungen wird, sich intensiv mit dem Oberstoff zu verbinden.

Somit wird erfindungsgemäß auch ein Flächengebilde zur Verfügung gestellt, das durch das beschriebene Verfahren erhältlich ist, wobei dieses Flächengebilde beim Fixieren mit anderen Flächengebilden sich durch eine besonders hohe Wasch- und Chemischreinigungsfestigkeit des erzeugten Haftverbundes auszeichnet; ebenso zeigt dieses Flächengebilde keine Verminderung der Haftung auf, wenn es als fixierbarer Einlagestoff, insbesondere für Oberbekleidung verwendet wird.

Jeder Punkt des rasterförmig auf den Zwischenträger aufgebrachten Schmelzklebers hat wie bei den bereits bekannten Transferbeschichtungsverfahren die gleiche Größe, so daß Unterschiede in der Gleichmäßigkeit des Haftverbundes wegen unterschiedlicher Größe und Gestalt der Schmelzkleberpunkte vermindert bzw. vermieden werden können. Ein weiterer Vorteil des durch das erfindungsgemäße Beschichtungsverfahren hergestellten Flächengebildes liegt darin, daß dessen Temperaturbeanspruchung während der Herstellung kaum über etwa 160 °C hinausgeht und somit deutlich niedriger liegt als bei Verfahren, die eine Einfachbeschichtung ermöglichen und eine Temperatur bis zu 250 °C anwenden. Durch die niedrigere Temperaturbeanspruchung werden insbesondere die Weichheit und Fülle des Fixierverbundes erhöht.

Die Weichheit und die Fülle werden auch dadurch erhöht, daß bei dem erfindungsgemäß hergestellten Flächengebilde die Schmelzkleberpunkte nicht die Form von breitgewalzten Plättchen aufweisen, die die nach den bekannten Transferverfahren hergestellten Flächengebilde haben, wie es eingangs dargelegt wurde.

Der durch das Beschichtungsverfahren dieser Erfindung erhältliche Schichtaufbau des Flächengebildes mit einer weiteren Schicht führt auch zu einer völligen Rückschlagsfreiheit. Gleichzeitig ist es möglich geworden, die bei bisherigen Direktbeschichtungen häufig beobachtbaren blasenförmigen Loslösungen im Schrägzug des Fixierverbundes zu beseitigen und deren Haftung, Wasch- und Chemischreinigungsfestigkeit zu optimieren. Die Haftfestigkeitswerte reichen in manchen Fällen über die der bekannten Direktdoppelbeschichtungen hinaus. Einmal fehlt den Direktdoppelbeschichtungen die haftungsfördende und blasenreduzierende Gleichmäßigkeit der Beschichtungspunkte und zum anderen ist der Aufbau aus einer Schicht, die Sperrwirkungen ausübt, und der Schmelzkleberschicht nicht optimal aufeinander abgestimmt.

Bei dem heute üblicherweise angewandten berieselten Pastenpunkt (vergleiche Sroka, aaO, S. 131-136 und 173) reicht die aufgebrachte Rieselschicht über die Basisschicht hinaus und trägt mit dem hinausragenden Anteil kaum zur Haftung, eher zu einer gewissen Rückschlagsanfälligkeit bei. Auch gelingt es bei dem berieselten Pastenpunkt nicht, die Bereiche zwischen den Punkten völlig frei von Streupulver besonders sehr feinkörniger Art (Pulverstaub) zu halten, wodurch eine unerwünschte Griffverhärtung entsteht, die Rückschlagsanfälligkeit weiter zunimmt und die Haftfestigkeit nochmals ungünstig beeinflußt wird.

Demgegenüber ist die Transferbeschichtung mit einer weiteren Schicht gemäß dieser Erfindung so ausgebildet, daß das durch das erfindungsgemäße Verfahren hergestellte Flächengebilde schmelzkleberhaltige Punkte aufweist, deren weitere Schicht ebenfalls punktförmig ausgestaltet ist, wobei diese letzteren Punkte die gleiche Basisfläche wie die schmelzkleberhaltige Punkte haben. Es wird dabei so vorgegangen, daß nur die Kuppen der auf den Zwischenträger aufgebrachten schmelzkleberhaltigen Punkte mit dem Mittel, das die weitere Schicht ausmacht, benetzt werden. Eine Benetzung der Bereiche zwischen den Punkten, welche die Griffweichheit reduzieren würde, kann dabei gänzlich ausgeschaltet werden.

Bevorzugt wird als die weitere Schicht ein Film aus einer Dispersion oder einer Lösung eines Kunststoffes oder Harzes verwendet, der bzw. das bei Fixierbedingungen nicht mehr thermoaktivierbar ist. Vorzugsweise ist dieser Kunststoff oder das Harz vernetzbar und verliert durch die Vernetzung die Thermoaktivierbarkeit, unter Ausbildung der gewünschten Sperrwirkung. Die Dispersionen oder Lösungen, die dieses Mittel enthalten, sollen im Verarbeitungszustand noch fließfähig und angedickt sein. Bevorzugt werden vernetzbare Mittel auf der Basis von Poly(meth)acrylat, Polyacetat, Polyurethan, Polybutadienstyrol, Polyacrylnitrilbutadienstyrol, Polyacrylnitril, Polyacrylnitrilbutadien, Harnstoff-Formaldehyd-Harz, Melamin-Formaldehyd-Harz, Alkylharnstoff-Formaldehyd-Harz und deren Veretherungsprodukte und der gleichen verwendet.

Es sind aber auch Lösungen oder Dispersionen verwendbar, die unter Fertigungsbedingungen nicht kondensieren oder vernetzen müssen, die aber beim Bügeln (Fixieren) der beschichteten Flächengebilde keine nennenswerte Fließeigenschaften mehr zeigen dürfen. Hierzu zählen beispielsweise einige ohne Vernetzerkomponenten einsetzbare Polyurethane. In jedem Fall ist zu fordern, daß die beim hergestellten Flächengebilde unter dem Schmelzkleber ausgebildete weitere Schicht, die die Sperrwirkung aufweist, voll wasch- und chemischreinigungsfest ist.

Falls nicht vernetzte, aber beim Fixieren nicht oder kaum fließende Produkte mit Wasch- und Reinigungsfestigkeit angewandt werden, kann in manchen Fällen vorteilhafterweise eine Nachtemperaturbehandlung entfallen oder diese auf einer kurzen Temperaturbehandlungsstrecke ausgeführt werden. Bei relativ milden Temperaturbehandlungen um 100 °C können auch 50:50 - Mischungen von vernetzbaren Polyacrylaten und vernetzbaren Polyurethanen in Gegenwart von Alkylharnstoff-Formaldehyd-Harzen und die Vernetzung katalysierender Säuren oder Säurespender verwendet werden.

Die für das Verfahren geeigneten Schmelzkleber basieren vorzugsweise auf Copolyamiden, Copolyestern, Polyurethanen oder Niederdruckpolyethylenen oder einer Mischung davon. Bei Rasterausführungen mit üblicherweise geringer Punkthöhe kann es zweckmäßig sein, die Beschichtungsmasse mit Anteilen von Treibmitteln zu versehen. So kann man beispielsweise die Schmelzkleberpaste für das Fertigungsverfahren nach Figur V (vgl. nachfolgende Beschreibung der Fig. V) mit Ammoniumbicarbonat als Treibmittel versetzen, um eine Aufblähung und Volumenvergrößerung der Pastenpunkte zu erreichen. Auch organische Treibmittel wie Azoverbindungen, Hydrazinderivate, Semicarbazide, Azide, Triazole, N-Nitrosoverbindungen sind verwendbar.

Als Zwischenträger kann entweder eine Heizwalze oder ein Trägerband verwendet werden. Das Trägerband kann in Form eines Endlosbandes ausgeführt sein, so daß es eine Schleife bildet und im Rundlauf geführt wird. Mit geringerem installativen Aufwand wird ein Band mit Anfang und Ende von einer Kaule ab- und auf eine andere Kaule wieder aufgewickelt. Sowohl die Walze als auch das Trägerband, die als Zwischenträger dienen, besitzen eine adhäsive Oberfläche und sind z.B. gummiert, besonders bevorzugt silikongummiert.

Als Material für das Trägerband sind Polyestergewebe und Gewebe aus hochtemperaturbeständigen Verstärkerfaserstoffen, wie Glasgewebe und Gewebe aus Polyimid-, Polyaromaten- und Kohlenfaserstoffen bevorzugt. Gewebe aus hochtemperaturbeständigen Faserstoffen sind besonders dann vorzuziehen, wenn hohe Temperaturbeständigkeiten gewünscht oder erforderlich sind. Als gummiertes Polyestergewebe ist beispielsweise ein feines und dicht gewebtes silikongummiertes Gewebe mit einer Dicke von 0,10 bis 0,15 mm und einem Gewicht von ca. 0,55 g/m² geeignet.

Die Gummierung auf der Walze hat vorzugsweise eine Stärke von 0,5 bis 2,0 mm, besonders bevorzugt 1,0 bis 1,5 mm. Das silikongummierte Trägerband ist vorzugsweise 0,10 bis 0,15 mm dick.

Die Aufbringung des Schmelzklebers auf den Zwischenträger kann nach einem der bekannten Verfahren erfolgen, z.B. nach dem Pulvertiefdruckverfahren, Hotmelt-Tiefdruckverfahren oder Siebdruckverfahren. Wird als Zwischenträger ein Trägerband verwendet, so kann dieses vor und nach dem rasterförmigen Beschichten mit dem Schmelzkleber auf eine höhere Temperatur erwärmt werden. Zum Beheizen vor dem Beschichten wird das Trägerband zweckmäßigerweise über entsprechende Heizwalzen geleitet. Nach dem Aufbringen des Schmelzklebers auf den Zwischenträger erfolgt gegebenenfalls zunächst ein Trocknen und/ oder An- oder Durchsintern, bevor die weitere Schicht aufgebracht wird. Das Vortrocknen, An- oder Durchsintern kann beispielsweise auf einer gummierten Heizwalze erfolgen. Bei Verwendung eines Trägerbandes kann es hingegen notwendig sein, das mit dem Schmelzkleber rasterförmig beschichtete Trägerband durch einen umluftbeheizten Trocknungs- und/oder infrarotbeheizten Sinterkanal zu leiten. Anschließend erfolgt eine Beschichtung mit dem Filmmaterial für die weitere Schicht. Dieses Filmmaterial wird durch einen üblichen Rollcoater auf die Kuppen der Schmelzkleberpunkte aufgebracht. Nach dem Benetzen der Schmelzkleberpunkte mit dem Filmmaterial kann der so beschichtete Zwischenträger zunächst schwach vorgetrocknet werden, um einen kleinen Teil der flüchtigen Bestandteile der angetragenen Filmmasse zu entfernen. Eine Vernetzung darf dabei noch nicht stattfinden.

Nachdem der Zwischenträger mit Schmelzkleber und der weiteren gegebenenfalls schwach vorgetrockneten Schicht aus der Filmmasse versehen ist, wird das zu beschichtende Flächengebilde für die Übertragung auf die Seite des Zwischenträgers aufgelegt und angedrückt, die den schmelzkleberhaltigen Schichtaufbau trägt. Dabei gelangt das Flächengebilde mit dem auf den schmelzkleberhaltigen Punkten aufgebrachten noch flüssigen Filmmaterial in Berührung und es erfolgt eine Verankerung der benetzten schmelzkleberhaltigen Punkte an dem Flächengebilde. Wird als Zwischenträger eine gummierte Heizwalze mit genügend großem Umfange verwendet, verläßt das Flächengebilde nach weiterer Trocknung unter Mitnahme der Gesamtbeschichtung diese Heizwalze beispielsweise über eine Umlenkrolle und wird dann bevorzugt zu einer weiteren Heizvorrichtung, z.B. zu einem Infrarotstrahler oder auch einer Heißluftbeheizung, geführt. Vor dem Eintritt des beschichteten Flächengebildes in diese letzte Heizvorrichtung ist es zweckmäßig, eine Zug- und Stauchwalze zu installieren, die den Endträger locker auf das Transportband der Heizvorrichtung auflegt. Bevorzugt weist diese Zug- und Stauchwalze einen griffigen Belag, z.B. einen Noppenbelag auf. Durch Verwendung der Zug- und Stauchwalze werden spätere Längskrumpferscheinungen insbesondere bei Synthetikware wirksam eliminiert.

Es kann nicht nur vor Auflegen des Endträgers auf die Beschichtung auf der Strecke zwischen der Stelle, an der der Film auf die schmelzkleberhaltigen Punkte aufgebracht wird, bis zu der Auflegestelle des Endträgers eine schwache Vortrocknung der angetragenen Filmmasse erfolgen. Von der Auflegestelle des Endträgers bis zur Abnahme des beschichteten Endträgers von der gummierten Heizwalze erfolgt zusätzlich eine weitere Trocknung und gegebenenfalls eine Vorvernetzung der Filmmasse. Die Restvernetzung und gegebenenfalls Nachtrocknung kann dann in der oben erwähnten nachgeschalteten Heizvorrichtung stattfinden.

Wenn eine gummierte Heizwalze als Zwischenträger verwendet wird, liegt die Oberflächentemperatur dieser Heizwalze vorzugsweise zwischen 130 °C und 150 °C. Werden Trägerbänder verwendet, kann die Temperatur während des Filmantrages bis auf Raumtemperatur absinken. Die anschließende Trocknung bis zur Abtrennung des Zwischenträgers ist dann tunlichst bei 75-95 °C unter dem Erweichungsbeginn des Schmelzklebers auszuführen.

Diese Erfindung wird nachfolgend unter Bezugnahme auf die Figuren erläutert. In den Zeichnungen zeigt
Figur I ein durch das beschriebene Verfahren erhältliches Flächengebilde;
Figur II ein Pulverpunkttiefdruckverfahren unter Verwendung einer gummierten Heizwalze als Zwischenträger;
Figur III ein Hotmelt-Tiefdruckverfahren unter Verwendung einer gummierten Heizwalze als Zwischenträger;
Figur IV ein Hotmelt-Siebdruckverfahren unter Verwendung einer gummierten Heizwalze als Zwischenträger;
Figur V ein Pastensiebdruckpunktverfahren unter Verwendung eines gummierten Trägerbandes als Zwischenträger;
Figur VI ein Pulverpunkt-Tiefdruckverfahren unter Verwendung eines gummierten Trägerbandes als Zwischenträger;
Figur VII ein Hotmelt-Siebdruckverfahren unter Verwendung eines gummierten Trägerbandes als Zwischenträger;
Figur VIII ein Hotmelt-Tiefdruckverfahren unter Verwendung eines gummierten Trägerbandes als Zwischenträger; und
Figur IX einen Rollcoater, der zum Auftrag der Filmmasse auf schmelzkleberhaltige Punkte geeignet ist.

Das Verfahren, das in Figur V veranschaulicht ist, wird besonders bevorzugt, weil es erlaubt, die Schmelzklebermasse breit zu variieren. Das Verfahren wird auch besonders bevorzugt, weil es gestattet, vor dem Antrag der Filmmasse mit dem Rollcoater auf die Pastenpunkte noch zusätzlich Pulver aufzustreuen, wodurch sich die Punkthöhe vergrößert und nach dem Rollcoaterantrag sich ein dreischichtiger Punkteaufbau ausbildet, der besonders hervorragende Haftfestigkeiten erbringt und bei milden Fixierbedingungen höchste Waschfestigkeit erzeugt, wie sie bisher nicht erreichbar war.

Der bei allen Verfahren, die in den Figuren II bis VIII veranschaulicht sind, verwendete Rollcoater (2) besitzt eine Antragswalze (4) und eine Dosierwalze (6) (siehe Fig. IX). Auf die Antragswalze (4) wird ein dünner, in der Stärke variierbarer gleichmäßig dicker, noch fließfähiger Film (8) einer Dispersion oder Lösung mit bei Fixierbedingungen nicht mehr thermoaktivierbarem, beispielsweise vernetzbarem Kunststoffanteil mittels in gleicher Richtung bewegter Dosierwalze (6) angetragen, auf der ein Abstreifrakel (10) aufsitzt. Die Speisung mit der Filmmasse erfolgt entweder durch Eintauchen der Antragswalze (4) in einen die Filmmasse enthaltenden Tauchbehälter, dessen Boden wassergekühlt sein kann. Es ist auch möglich, die Masse auf den einstellbaren Spalt zwischen Antragswalze (4) und Dosierwalze (6) aufzulegen. Die Spaltöffnung bestimmt dabei die Filmstärke. Die Antragswalze (4) bewegt sich mit gleicher Umfangsgeschwindigkeit wie der Zwischenträger, der entweder eine gummierte Heizwalze (12) oder ein gummiertes Trägerband (14) ist. Auch auf der Antragswalze (4) kann ein Abstreifrakel aufsitzen, der Reste des Filmes (8), die nach der Übertragung auf den Zwischenträger (12,14) auf der Antragswalze (4) verbleiben, entfernt. Die Reste der Filmmasse werden über ein Filter ständig im Kreis gepumpt und von etwaigen Verunreinigungen entfernt.

In den Figuren II bis IV ist das erfindungsgemäße Verfahren zum rasterförmigen Beschichten von Flächengebilden mit Schmelzklebern veranschaulicht, wobei hier als Zwischenträger eine gummierte Heizwalze (12) verwendet wird. Der Schmelzkleber (16) wird dabei entweder im Pulverpunktverfahren (Fig. II), Hotmelt-Tiefdruckverfahren (Fig. III) oder Hotmelt-Siebdruckverfahren (Fig. IV) aufgebracht. Dazu werden die entsprechenden, üblicherweise verwendeten Vorrichtungen eingesetzt. Bei dem in Fig. II gezeigten Pulverpunkt-Tiefdruckverfahren werden ein Rüttler (30) mit einem Pulvertrichter sowie eine Gravurwalze (28) und eine Heizwalze (12) verwendet. Das Schmelzkleberpulver wird durch die Gravurwalze (28), die an der gummierten Heizwalze (12) angedrückt wird, aufgebracht, so daß das Pulver rasterförmig auf die Heizwalze übertragen wird. Die Schmelzkleberpunkte (16) werden dann durch Drehen der Heizwalze (12) in die Richtung der Antragswalze (4) des Rollcoaters (2) bewegt. Auf der Strecke vom Antrag des Pulvers bis zur Anlegestelle des Rollcoaters sintern die Pulverkörner durch Temperatureinwirkung der Heizwalze mindestens teilweise zusammen. Dann erfolgt ein Auftrag mit der Filmmasse (8) mit dem Rollcoater so, daß nur die Kuppen der Schmelzkleberpunkte (16) mit der Filmmasse versehen werden.

Nach dem Benetzen der Schmelzkleberpunkte mit der Filmmasse und einer gewissen Vortrocknung wird der Endträger (18) von einer nicht dargestellten Vorrichtung gegebenenfalls über Umlenk- und Vorheizwalzen der gummierten Heizwalze (12) zugeführt und auf diesen mit Filmmasse und Schmelzkleber beschichteten Heizwalzen-Zwischenträger aufgelegt. Der so erzeugte Verbund wird unter einer Schutz- und Absaughaube (26) hindurchgeleitet, um flüchtige Bestandteile abzuziehen. Nach dem Durchleiten unter der Schutz- und Absaughaube (26) wird der Endträger (18), auf dem nun der mit der Filmmasse benetzte Schmelzkleber verankert ist, ggf. über eine Umlenkrolle von der Heizwalze (12) unter Mitnahme der Gesamtbeschichtung abgezogen und über eine Zug- und Stauchwalze (22) einem Transportband (24) einer Heizvorrichtung (20) zugeführt. Bevorzugt ist diese Heizvorrichtung ein Infrarotstrahler. Hier erfolgt die Endtrocknung des beschichteten Flächengebildes, eine Nachsinterung des Schmelzklebers und gegebenenfalls eine Nachvernetzung der aufgetragenen Filmmasse (8). Nach dem Durchleiten durch diese Heizvorrichtung (20) wird das fertig beschichtete Flächengebilde (38) erhalten und kann bis zur weiteren Verwendung aufgewickelt und gelagert werden.

Das Verfahren, das in Fig. III dargestellt ist, unterscheidet sich von dem in Fig. II dargestellten Verfahren hauptsächlich im Hinblick auf die Art der Aufbringung des Schmelzklebers. Gemäß Fig. III wird der aufgeschmolzene Schmelzkleber im Tiefdruckverfahren unter Verwendung eines Hotmeltrakels (32) und einer beheizten Gravurwalze (28) auf eine silikongummierte Heizwalze (12) aufgebracht. Anschließend erfolgt die Benetzung des Schmelzklebers (16) mit der Filmmasse (8) sowie die Übertragung auf den Endträger (18) wie oben beschrieben.

Schließlich zeigt Fig. IV die Aufbringung des aufgeschmolzenen Schmelzklebers mittels Siebschablone (34) mit einem Hotmeltrakel (32). Die übrigen Verfahrensschritte sind nahezu analog zu den entsprechenden Verfahrensschritten, die im Zusammenhang mit Fig. II beschrieben wurden. Nach dem Durchleiten durch die Heizvorrichtung (20) wird das Flächengebilde (38) über eine Kühlwalze (36) geleitet.

Die Figuren V bis VIII beschreiben die Transferbeschichtung unter Verwendung eines Trägerbandes (14) als Zwischenträger. Es versteht sich von selbst, daß das Trägerband (14) in Form eines Endlosbandes ausgebildet sein kann, was in diesen Figuren nicht speziell dargestellt ist.

In Fig. V wird der Schmelzkleber durch ein Pastensiebdruckpunktverfahren aufgebracht. Dazu wird eine übliche Siebschablone (34) verwendet. An der Siebschablone (34) liegt eine Gegenwalze an, und das Trägerband (14) wird zwischen dieser Walze und der Siebschablone (34) hindurchgeführt und beschichtet.

Nach dem Beschichten des Trägerbandes mit den noch feuchten Schmelzkleberpastenpunkten (16) wird es direkt durch eine Vorrichtung (42) mit Transportband zum Trocknen und Sintern geleitet oder noch vorher mit Pulver bestreut, z.B. mit Schmelzkleberpulver mit höherem Schmelzbeginn, höherer Schmelzviskosität und erhöhter Waschfestigkeit, wie sie handelsübliche Copolyamide mit erhöhtem Laurinlactamanteil darstellen. Nach dem Bestreuen wird der an den Punkten nicht haftende Pulverüberschuß abgeblasen und abgesaugt (zur Absaugung dieses sogenannten Punkt-Riesel-Verfahrens, vergleiche Sroka aaO S. 134-136). Anstelle von Copolyamidpulvern können auch Copolyester-, Niederdruckpolyethylen- oder PVC-Pulver aufgestreut werden. Anschließend erfolgt die Benetzung der Schmelzkleberpunkte bzw. schmelzkleberhaltigen Punkte mit der Filmmasse (8) mit Hilfe des Rollcoaters (2). Es ist zweckmäßig, unter der Antragswalze (4) eine auf einstellbaren Spalt anfahrbare Gegenwalze vorzusehen, wobei das Trägerband (14) zwischen diesen beiden Walzen durchgeleitet wird. Die Spaltbreite wird so eingestellt, daß nur die Kuppen der Schmelzkleberpunkte bzw. schmelzkleberhaltigen Punkte benetzt werden. Um die dabei aufgetragene Benetzungsschicht mit dem Endträger zu verbinden und auf dem Trägerband zu trocknen und zu verfestigen, ist es zweckmäßig, das Trägerband (14) durch ein Preßwerk aus Heizwalze (14) und variabel anpreßbarer weichgummierter (Shore-Härte ca. 30) Gegenwalze (46) und dann über eine Batterie mehrerer Heizzylinder (48,50,52,54) zu führen, bei der dazwischen jeweils Umlenkwalzen (56,58,60) vorhanden sind. Die Heizzylinder (44,48,50,52,54) sind auf eine erhöhte Temperatur erhitzt, z.B. auf etwa 90°C. Über der Heizwalzenbatterie ist ein Saugkanal (62) vorgesehen, der flüchtige Stoffe von dem beschichteten Zwischenträger entfernen soll. Beim Einlauf des Trägerbandes (14) in das zusammen gefahrene Preßwerk aus zwei Walzen (44,46) wird das zu beschichtende Flächengebilde (18) auf das Trägerband (14) aufkaschiert. Dieser Verbund aus Trägerband und zu beschichtendem Flächengebilde wird über die Heizzylinderbatterie (48,50,5,54) bewegt, und anschließend erfolgt nach der haftfesten Verankerung der benetzten und weitgehend abgetrockneten schmelzkleberhaltigen Punkte auf dem Flächengebilde eine beschichtungsfreie Abtrennung des Zwischenträgers (14). Das beschichtete Flächengebilde mit übernommener Beschichtigung wird über eine weitere Umlenkrolle (64) zu einer Heizvorrichtung (20) geführt, die ein Transportband (24) aufweist. Auch in diesem Fall ist vor der Heizvorrichtung (20) eine Zug- und Stauchwalze (22) angeordnet. Nach dem Durchleiten des beschichteten Flächengebildes (38) durch die Heizvorrichtung (20) wird es über eine Kühlwalze (40) geleitet und kann anschließend bis zur weiteren Verwendung aufgewickelt und gelagert werden.

Das nach der Heizbatterie abgetrennte Trägerband (14) kann einer Reinigungsvorrichtung (66) zugeführt werden. Diese Reinigungsvorrichtung kann Spritzrohre und eine Rundbürste aufweisen, zum Entfernen von noch anhaftenden Beschichtungsresten. Danach wird es zur Entfernung von Restfeuchtigkeit zwischen zwei Preßwalzen hindurchgeleitet, von denen eine eine angefahrene Gummiwalze ist. Anschließend kann das Trägerband bis zur Wiederverwendung entweder aufgewickelt oder direkt einem erneuten Beschichtungsvorgang zugeführt werden.

Die Figuren VI bis VIII beschreiben Beschichtungsverfahren, die sich von dem Beschichtungsverfahren gemäß Fig. V hauptsächlich dahingehend unterscheiden, daß die Art der Schmelzpunktbeschichtung unterschiedlich ist. Gemäß Fig. VI erfolgt die Schmelzkleberbeschichtung im Pulvertiefdruckverfahren mittels Rüttler (30), Pulvertrichter, Gravurwalze (28) und mindestens einer angepreßten Heizwalze. Die Gravurwalze (28) ist auf ca. 25 bis 40°C beheizt. Die mindestens eine (Vor)Heizwalze bringt das Trägerband vor und/oder nach dem Beschichtungsvorgang mit Schmelzkleberpulver auf eine höhere Temperatur. Die Heizwalzen können auf 135-170 °C Oberflächentemperatur beheizt sein. Die Sinterung der Schmelzkleberpunkte erfolgt auf der Heizwalze und im Sinterkanal (42).

Gemäß Fig. VII erfolgt der Auftrag des geschmolzenen Schmelzklebers mit Hilfe einer Siebschablone (34) mit Hotmeltrakel (32). Auch hier ist eine Gegenwalze (28), die gegebenenfalls beheizt sein kann, vorhanden.

In Fig. VIII wird der Schmelzkleber durch das Hotmelt-Tiefdruckverfahren unter Verwendung eines Hotmeltrakels (32) und einer gegebenenfalls beheizten Gravurwalze (28) aufgebracht. Bei den Verfahren nach Figuren VII und VIII entfällt eine Trocknung der Schmelzkleberschicht nach deren Beschichtungsvorgang.

In Fig. IX ist ein erfindungsgemäß verwendeter Rollcoater (2) zum Aufbringen der Filmmasse (8) auf die Schmelzkleberschicht dargestellt. Aus dieser Figur geht hervor, daß die Berührung zwischen dem auf die Antragswalze (4) aufgetragenen Film (8) und der rasterförmig auf der gummierten Heizwalze (12) aufsitzenden Beschichtung (16) so eingestellt wird, daß die Kuppen des Schmelzklebers (16) eben benetzt werden. Die nach dem Benetzen des Schmelzkleberrasters (16) auf der Antragswalze (4) verbleibende Filmmasse (8) wird abgerakelt und ständig über ein Filter umgepumpt und dabei von etwaigen Verunreinigungen befreit. Die Antragswalze (4) und/ oder die Dosierwalze (6) können von innen mit Wasser gekühlt sein.

In analoger Weise wird auch ein rasterförmig beschichtetes Trägerband (14) mit dem auf die Antragswalze (4) aufgebrachten Film benetzt. Nach dem Verlassen der Heizwalze (12) oder der Heizbatterie (48,50,52,54) und bei der Trennung des Endträgers (18) vom Zwischenträger (14) sollen jedenfalls die flüchtigen Bestandteile der Filmmasse (8) überwiegend oder ganz verflüchtigt sein. Es soll auch vermieden werden, daß die Antragswalze (4) oder der an dem Zwischenträger (14) anliegende Endträger (18) einen rasterdeformierenden Druck auf die Transferbeschichtung ausübt. Das gilt auch an der Stelle, an der der Zwischenträger (14) von dem Endträger (18) abgelöst wird.

Nachfolgend werden beispielhaft noch ergänzende Angaben zu den Eigenschaften der in den Verfahren gemäß den Figuren II bis VIII verwendeten Einrichtungen gemacht. Soweit nicht angegeben, wird dabei Vestamid T730 (Handelsprodukt von Hüls) als Schmelzkleber verwendet.

### Figur 2:

Temperatur der Oberfläche der Gravurwalze (28): ca. 25 bis 40 °C.
Temperatur der Oberfläche der gummierten Heizwalze (12): 145 bis 150 °C.
Geschwindigkeit der Heizwalze (12): ca. 10 bis 15 m/min.
Abstand zwischen Dosierwalze (6) und Antragswalze (4): 0,20 mm bei 17 mesh.
Abstand zwischen Antragswalze (4) und Heizwalze (12): 0,25 mm bei 17 mesh.

### Figur 3:

Temperatur der Oberfläche der Gravurwalze (28): ca. 140°C.
Temperatur der Oberfläche der gummierten Heizwalze (12): ca. 140 °C.
Geschwindigkeit der Heizwalze (12): ca. 15 bis 20 m/min.
Abstand zwischen Dosierwalze (6) und Antragswalze (4): 0,20 mm bei 17 mesh.
Abstand zwischen Antragswalze (4) und Heizwalze (12): 0,25 mm bei 17 mesh.

### Figur 4:

Siebschablone vorgeheizt.
Temperatur der Oberfläche der gummierten Heizwalze (12): ca. 140 °C.
Geschwindigkeit der Heizwalze (12): ca. 15 bis 20 m/min.
Abstand zwischen Dosierwalze (6) und Antragswalze (4): 0,20 mm bei 17 mesh.
Abstand zwischen Antragswalze (4) und Heizwalze (12): 0,25 mm bei 17 mesh.

### Figur 5:

Druckpaste: Anbringung von Vestamid T730 Pl (Handelsprod. der Fa. Hüls).
Trocken- und Sinterkanal (42): ca. 150 °C.
Temperatur der Oberfläche der Heizzylinder (44,48,50, 52,54): dampfbeheizt ca. 95 °C.
Geschwindigkeit des Trägerbandes (14): ca. 40 m/min.
Trägerband (14): PES-Gewebe, silikongummiert, Dicke 0,14 mm.
Abstand zwischen Dosierwalze (6) und Antragswalze (4): 0,20 mm.
Abstand zwischen Antragswalze (4) und der Gegenwalze des Rollcoaters (2): 0,45 bis 0,50 mm.
Im Falle des Bestreuens der Pastenpunkte: Streupulver
Griltex 2P1 (Handelsprod. der Fa. Ems-Chemie).

### Figur 6:

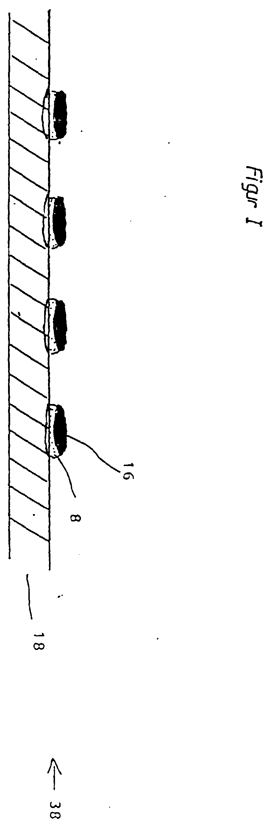

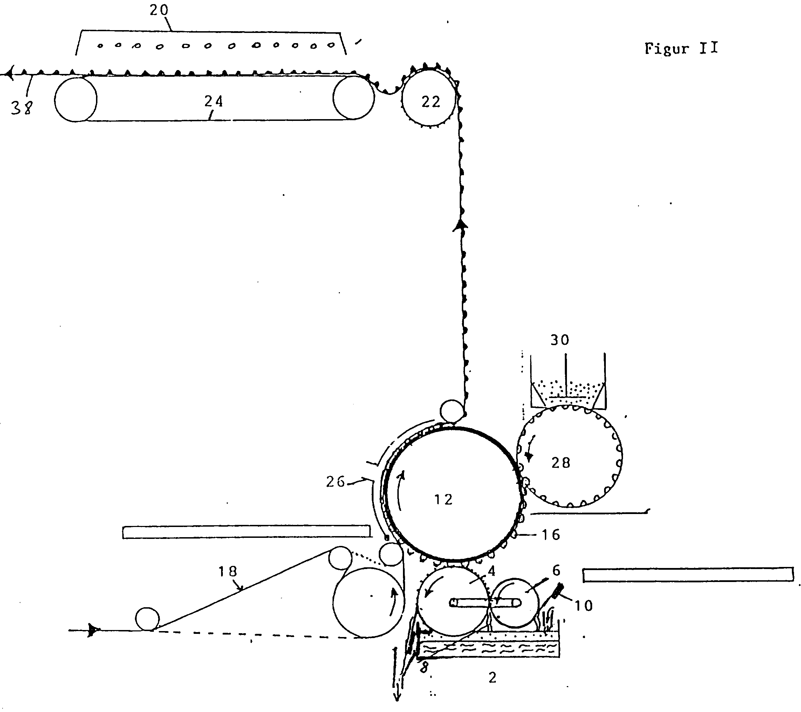

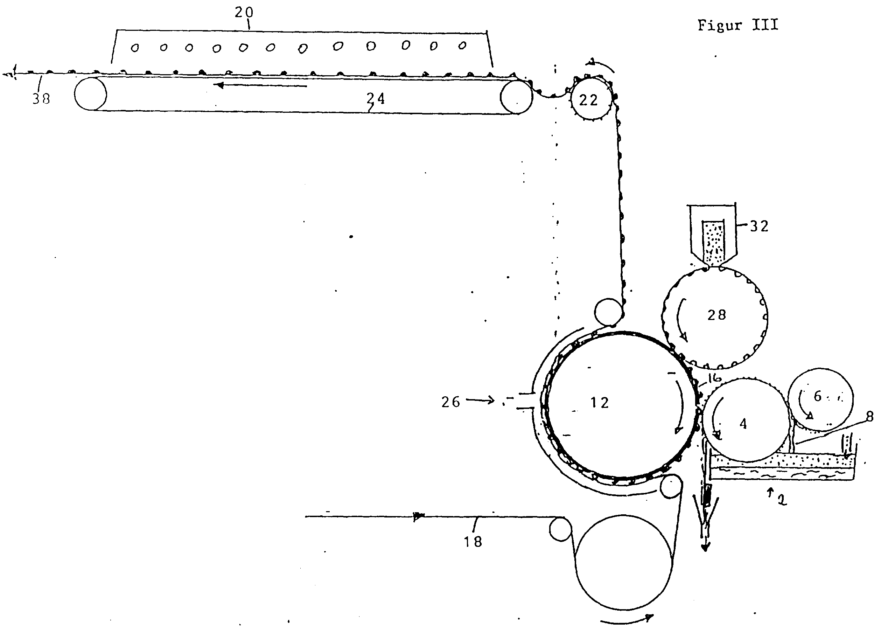

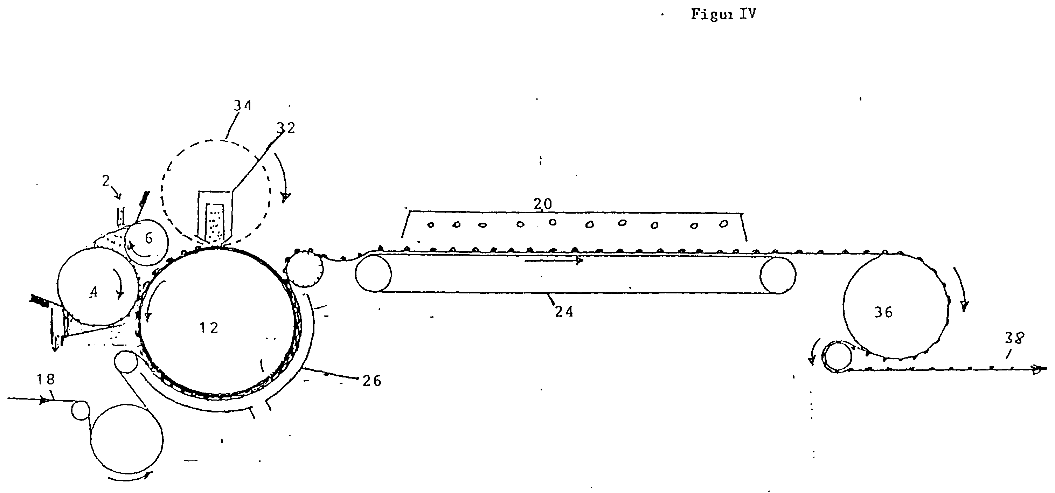

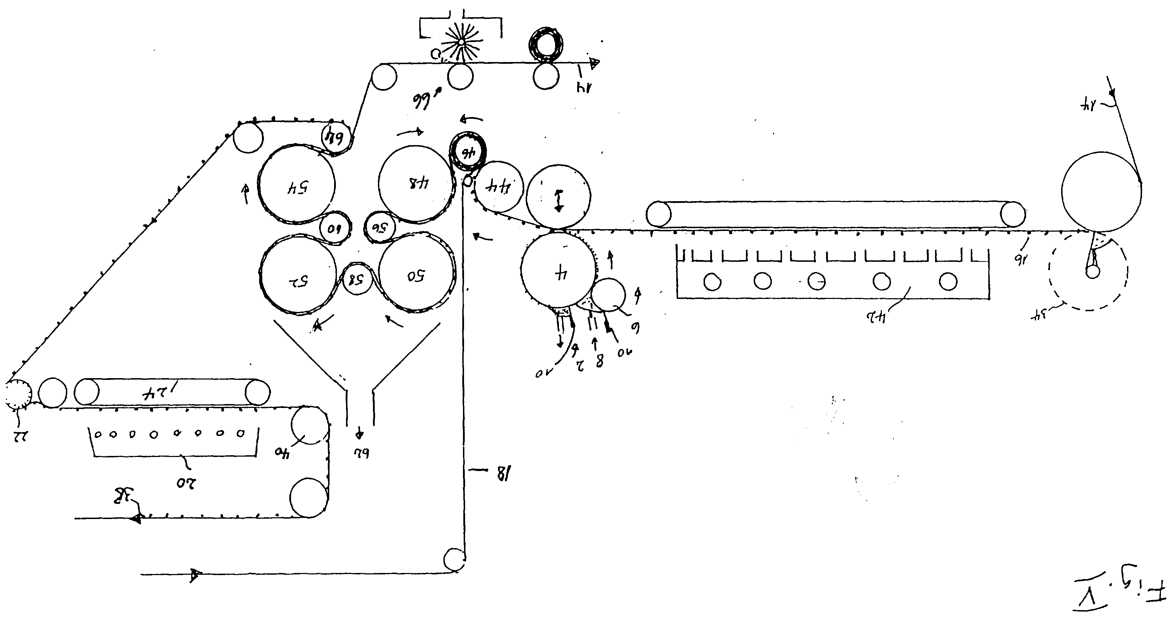

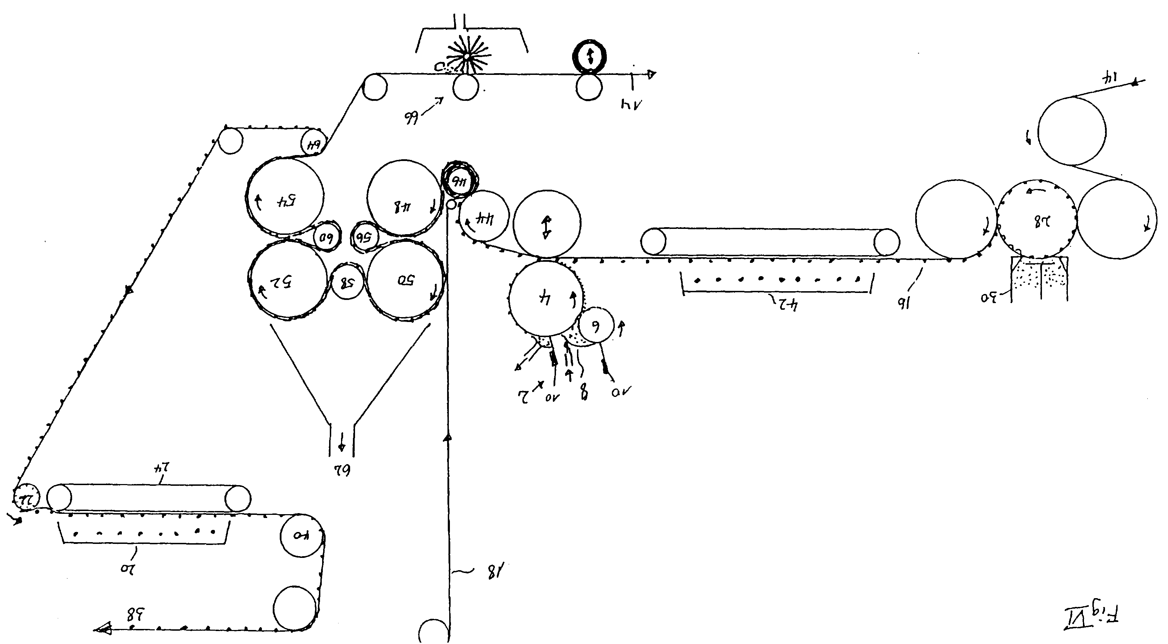

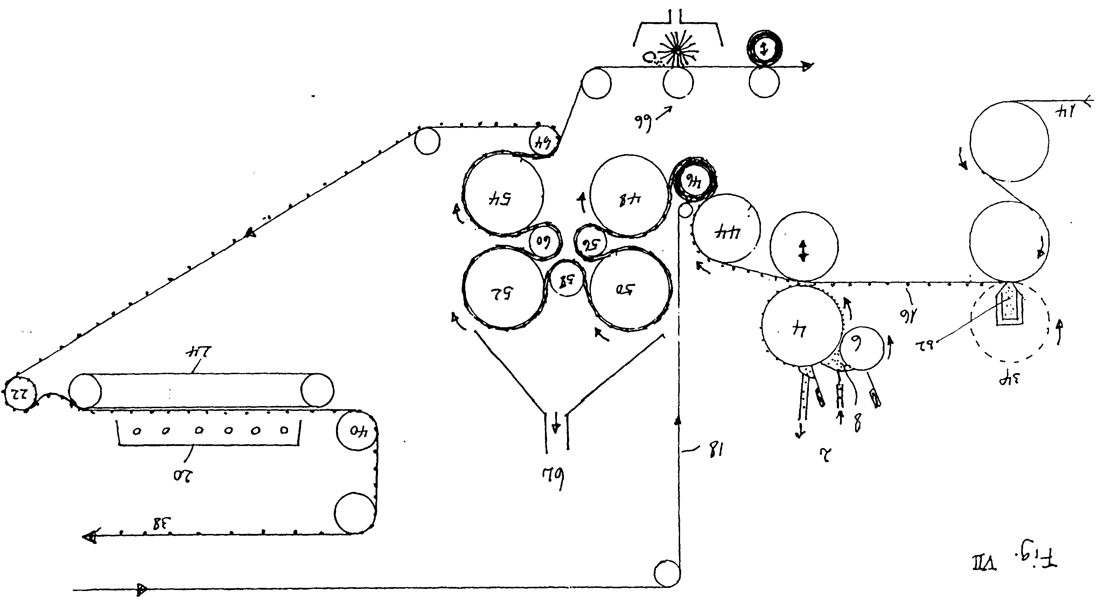

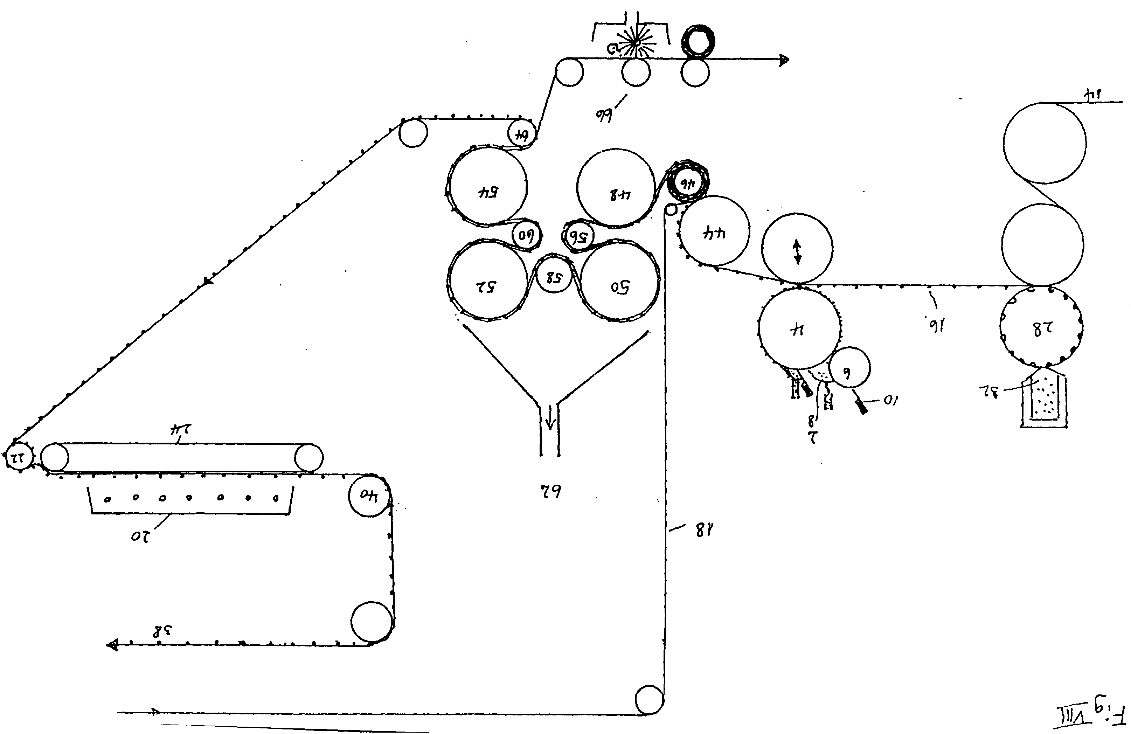

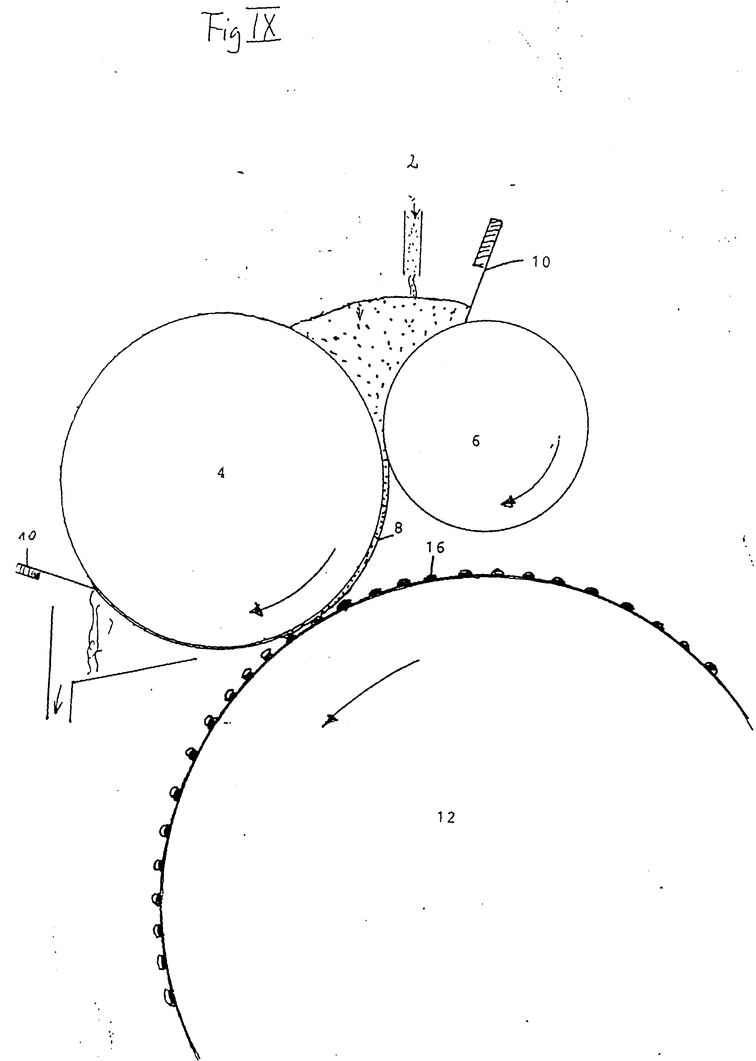

Oberflächentemperatur der Gravurwalze (28): ca. 35 °C.
Oberflächentemperatur der Heizwalze (12): ca. 180 °C.
Heizvorrichtung (42) mit Infrarot zum Sintern: dunkle Rotglut.
Oberflächentemperatur der Heizzylinder (44,48,50,52,54): dampfbeheizt ca. 75-90 °C.
Geschwindigkeit des Trägerbandes (14): ca. 30 m/min.
Trägerband (14) sowie Abstände zwischen Dosierwalze (6) und Antragswalze (4) bzw. Antragswalze (4) und Gegenwalze des Rollcoaters (2) wie bei Fig. 5.

### Figur 7:

Siebschablone: beheizt.
Oberflächentemperatur der Heizwalze (12): ca. 180 °C.
Oberflächentemperatur der Heizzylinder (44,48,50,52,54): dampfbeheizt, ca. 75-90 °C.
Geschwindigkeit des Trägerbandes (14): ca. 40 m/min.
Trägerband (14) sowie Abstände zwischen Dosierwalze (6) und Antragswalze (4) bzw. Antragswalze (4) und Gegenwalze des Rollcoaters (2) wie bei Fig. 5.

### Figur 8:

Oberflächentemperatur der Gravurwalze (28): ca. 140 °C.
Oberflächentemperatur der Heizwalze (12): ca. 140 °C.
Oberflächentemperatur des Heizzylinders (44,48,50,52,54): dampfbeheizt ca. 75-90 °C.
Geschwindigkeit des Trägerbandes (14): ca. 40 m/min.
Trägerband (14) sowie Abstände zwischen Dosierwalze (6) und Antragswalze (4) bzw. Antragswalze (4) und Gegenwalze des Rollcoaters (2) wie bei Fig. 5.

## Patentansprüche

1. Verfahren zum rasterförmigen Beschichten von Flächengebilden (38) mit Schmelzklebern (16) durch Aufbringen von Schmelzklebern (16) auf einen Zwischenträger (12,14) und durch Übertragen des Schmelzklebers (16) vom Zwischenträger (12,14) auf einen Endträger (18), insbesondere Einlagestoff,
**dadurch gekennzeichnet,** daß
der Raster einer schmelzkleberhaltigen Schicht (16) auf dem Zwischenträger (12,14) mit einer darauf aufgesetzten weiteren Schicht (8) versehen wird, die die Haftung zum Endträger (18) bewirkt, wobei die weitere Schicht nur auf die Kuppen der schmelzkleberhaltigen Punkte (16) aufgebracht wird und wobei als weitere Schicht (8) ein Film aus einer Dispersion oder einer Lösung eines Kunststoffes oder Harzes, der bzw. das bei Fixierbedingungen nicht mehr thermoaktivierbar ist, oder eine Lösung oder Dispersion verwendet wird, die unter Fertigungsbedingungen nicht kondensiert oder vernetzt, aber beim Fixieren der beschichteten Flächengebilde keine nennenswerte Fließeigenschaften mehr zeigen.

2. Verfahren nach Anspruch 1,
**dadurch gekennzeichnet,** daß
die Schicht (8) vernetzbare Bestandteile auf Basis von Poly(meth)acrylaten, Polyacetaten, Polybutadienstyrolen, Polybutadienstyrolacrylnitrilen, Polyacrylnitrilen, Polyurethanen, Harnstoff-Formaldehydharzen, Melamin-Formaldehydharzen, Alkylharnstoff-Formaldehyd-Harzen oder veretherten Produkten davon enthält.

3. Verfahren zum rasterförmigen Beschichten nach einem der Ansprüche 1 bis 2,
**dadurch gekennzeichnet,** daß
die mit der Schicht (8) benetzten schmelzkleberhaltigen Punkte (16) auf dem Zwischenträger (12,14) vor der Übertragung auf den Endträger (18) schwach vorgetrocknet werden.

4. Verfahren zum rasterförmigen Beschichten nach einem der Ansprüche 1 bis 3,
**dadurch gekennzeichnet,** daß
die flüchtigen Bestandteile der Schicht (8) beim Abnehmen des Endträgers (18) von dem Zwischenträger (12,14) überwiegend oder ganz verflüchtigt sind.

5. Verfahren zum rasterförmigen Beschichten nach einem der Ansprüche 1 bis 4,
**dadurch gekennzeichnet,** daß
eine Antragswalze (4) mit einem fließfähigen Film aus der weiteren Schicht (8) mit einheitlicher Stärke belegt wird, dessen nach dem Benetzen des schmelzkleberhaltigen Rasters (16) auf der Antragswalze (4) verbleibende Filmmasse abgerakelt und über ein Filter ständig im Kreis gepumpt und von etwaigen Verunreinigungen befreit wird.

6. Verfahren zum rasterförmigen Beschichten nach einem der Ansprüche 1 bis 5,
**dadurch gekennzeichnet,** daß
der Schmelzkleber der schmelzkleberhaltigen Schicht (16) auf Copolyamiden, Copolyestern, Polyurethanen oder Niederdruckpolyethylenen oder Mischungen daraus basiert.

7. Verfahren zum rasterförmigen Beschichten nach einem der Ansprüche 1 bis 6,
**dadurch gekennzeichnet,** daß
der Schmelzkleber der schmelzkleberhaltigen Schicht (16) mit Treibmitteln versehen wird.

8. Verfahren zum rasterförmigen Beschichten nach einem der Ansprüche 1 bis 7,
**dadurch gekennzeichnet,** daß
eine Zug- und Stauchwalze (22) mit griffigem Belag den beschichteten Endträger (38) einer Endbehandlung mit Wärme locker zuführt.

9. Verfahren zum rasterförmigen Beschichten nach einem der Ansprüche 1 bis 8,
**gekennzeichnet durch** die folgenden Schritte:
- die Kuppen der schmelzkleberhaltigen Punkte (16) werden auf einem Zwischenträger (12,14) in den auf einer Antragswalze (4) aufsitzenden Film zur Bildung der weiteren Schicht (8) getaucht und sind nach dem Herausziehen damit benetzt;
- der Endträger (18) wird auf diesen Zwischenträger (12,14) aufgelegt und bis zur Verfestigung der Filmschicht (8) auf den Schmelzkleberpunkten (16) am Zwischenträger (12,14) erhitzt;
- der Zwischenträger (12,14) wird vom Endträger (18) abgezogen, wobei die mit dem Film (8) versehenen schmelzkleberhaltigen Punkte (16) auf dem Endträger (18) vorhanden sind; und
- unter weiterer Hitzeeinwirkung erfolgt eine Nachbehandlung der benetzten schmelzkleberhaltigen Schicht und ein Sintern dieser Schicht.

10. Verfahren nach einem der Ansprüche 1 bis 9,
**dadurch gekennzeichnet,** daß
der Zwischenträger eine mit Silikongummi überzogene Heizwalze (12) oder ein mit Silikongummi überzogenes Trägerband (14) ist.

11. Verfahren zum rasterförmigen Beschichten nach Anspruch 10,
**dadurch gekennzeichnet,** daß
der Silikongummiüberzug der Heizwalze (12) eine Dicke von 0,5 bis 2,0 mm hat.

12. Verfahren zum rasterförmigen Beschichten nach Anspruch 10,
**dadurch gekennzeichnet,** daß
das silikongummierte Trägerband (14) eine Dicke von 0,10 bis 0,15 mm besitzt.

13. Verfahren zum rasterförmigen Beschichten nach Anspruch 10 oder 12,
**dadurch gekennzeichnet,** daß
das Trägerband (14) eine Schleife bildet und im Rundlauf geführt wird.

14. Verfahren zum rasterförmigen Beschichten nach Anspruch 10 oder 12,
**dadurch gekennzeichnet**, daß
das Trägerband (14) Anfang und Ende besitzt und ab- und aufgewickelt wird.

15. Verfahren zum rasterförmigen Beschichten nach einem der Ansprüche 10 bis 14,
**dadurch gekennzeichnet**, daß
das Trägerband (14) aus silikongummiertem Polyestergewebe oder aus einem Gewebe aus hochtemperaturbeständigen Verstärkerfaserstoffen wie Polyimid-, Polyaromaten-, Glas- oder Kohlefaserstoffen besteht.

16. Verfahren zum rasterförmigen Beschichten nach einem der Ansprüche 1 bis 5,
**dadurch gekennzeichnet,** daß
der Raster des Schmelzklebers (16) im Pulvertiefdruckverfahren, Hotmelt- Tiefdruckverfahren oder Siebdruckverfahren auf den Zwischenträger (12,14) aufgebracht wird.

17. Verfahren zum rasterförmigen Beschichten nach einem der Ansprüche 1 bis 16,
**dadurch gekennzeichnet,** daß
der im Siebdruckverfahren auf den Zwischenträger (14) aufgebrachte Raster der schmelzkleberhaltigen Schicht (16) vor dem Aufbringen der weiteren Schicht (8) und vor dem Trocknen mit Streupulver aus Copolyamiden, Copolyestern, Niederdruckpolyethylenen und/oder PVC bestreut und der nichthaftende Streupulverüberschuß entfernt wird.

18. Beschichtetes flächengebilde, erhältlich nach einem Verfahren nach einem der Ansprüche 1 bis 17.

19. Verwendung des beschichteten Flächengebildes erhältlich nach einem Verfahren nach einem der Ansprüche 1 bis 17 als fixierbarer Einlagestoff für Bekleidungsstücke.

## Claims

1. Process for the gridlike coating of sheet materials (38) with hot-melt adhesives (16) by application of hot-melt adhesives (16) on to an intermediate carrier (12, 14) and by transfer of the hot-melt adhesive (16) from the intermediate carrier (12, 14) on to a final substrate (18), especially interlining material,
characterised in that
the grid of a layer (16) containing hot-melt adhesive on the intermediate carrier (12, 14) is provided with a further layer (8) placed thereon which produces the adhesion to the final substrate (18), wherein the further layer is applied only on the crests of the dots (16) containing hot-melt adhesive and wherein as further layer (8) a film made of a dispersion or a solution of a plastic or resin which can no longer be heat-activated under setting conditions, or a solution or dispersion is used which does not condense or cross-link under production conditions but during setting of the coated sheet materials no longer display appreciable flow properties.

2. Process according to Claim 1,
characterised in that
the layer (8) contains cross-linkable components on the basis of poly(meth)acrylates, polyacetates, polybutadiene-styrenes, polybutadiene-styrene-acrylonitriles, polyacrylonitriles, polyurethanes, urea-formaldehyde resins, melamine-formaldehyde resins, alkylurea-formaldehyde resins or etherified products thereof.

3. Process for coating in the form of a grid according to one of Claims 1 to 2,
characterised in that the dots (16) containing hot-melt adhesive moistened with the layer (8) are moderately predried on the intermediate carrier (12, 14) before the transfer on to the final substrate (18).

4. Process for coating in the form of a grid according to one of Claims 1 to 3,
characterised in that the volatile components of the layer (8) have for the most part or totally evaporated on removal of the final substrate (18) from the intermediate carrier (12, 14).

5. Process for coating in the form of a grid according to one of Claims 1 to 4,
characterised in that an application roller (4) is covered in uniform thickness with a flowable film of the further layer (8), of which the film compound remaining on the application roller (4) after moistening the grid (16) containing hot-melt adhesive is removed by doctor blade and constantly recirculated through a filter by pumping and freed of any impurities.

6. Process for coating in the form of a grid according to one of Claims 1 to 5,
characterised in that the hot-melt adhesive of the layer (16) containing hot-melt adhesive is based on copolyamides, copolyesters, polyurethanes or low-pressure polyethylenes or mixtures thereof.

7. Process for coating in the form of a grid according to one of Claims 1 to 6,
characterised in that the hot-melt adhesive of the layer (16) containing hot-melt adhesive is provided with blowing agents.

8. Process for coating in the form of a grid according to one of Claims 1 to 7,
characterised in that a tensioning and crushing roller (22) with a gripping coating feeds the coated final substrate (38) loosely to a final treatment with heat.

9. Process for coating in the form of a grid according to one of Claims 1 to 8,
characterised by the following steps:
- the crests of the dots (16) containing hot-melt adhesive on an intermediate carrier (12, 14) are immersed in the film resting on an application roller (4) to form the further layer (8) and after withdrawal are moistened therewith;
- the final substrate (18) is placed on top of this intermediate carrier (12, 14) and heated on the intermediate carrier (12, 14) until the film layer (8) solidifies on the hot-melt adhesive dots (16);
- the intermediate carrier (12, 14) is pulled off from the final substrate (18), wherein the dots (16) containing hot-melt adhesive provided with the film (8) are present on the final substrate (18); and
- under further action of heat there ensues a subsequent treatment of the moistened layer containing hot-melt adhesive and sintering of this layer.

10. Process according to one of Claims 1 to 9,
characterised in that the intermediate carrier is a heating roller (12) covered with silicone rubber or a carrier belt (14) covered with silicone rubber.

11. Process for coating in the form of a grid according to one of Claims 1 to 10,
characterised in that the silicone rubber covering of the heating roller (12) has a thickness of 0.5 to 2.0 mm.

12. Process for coating in the form of a grid according to one of Claims 1 to 10,
characterised in that the carrier belt (14) coated with silicone rubber has a thickness of 0.10 to 0.15 mm.

13. Process for coating in the form of a grid according to Claim 10 or 12,
characterised in that the carrier belt (14) forms a loop and is guided in a circulating path.

14. Process for coating in the form of a grid according to Claim 10 or 12,
characterised in that the carrier belt (14) possesses a beginning and an end and is unwound and rewound.

15. Process for coating in the form of a grid according to one of Claims 10 to 14,
characterised in that the carrier belt (14) consists of polyester woven fabric coated with silicone rubber or of a woven fabric made of high-temperature resistant reinforced fibres such as polyimide, polyaromatic, glass or carbon fibres.

16. Process for coating in the form of a grid according to one of Claims 1 to 15,
characterised in that the grid of the hot-melt adhesive (16) is applied to the intermediate carrier (12, 14) by the powder intaglio printing process, hot-melt intaglio printing process or screen printing process.

17. Process for coating in the form of a grid according to one of Claims 1 to 16,
characterised in that before application of the further layer (8) and before drying, the grid of the layer (16) containing hot-melt adhesive applied to the intermediate carrier (14) by the screen printing process is sprinkled with dusting powder made of copolyamides, copolyesters, low-pressure polyethylenes and/or PVC and the non-adhering excess of dusting powder is removed.

18. Coated sheet material obtainable according to a process according to one of Claims 1 to 17.

19. Use of the coated sheet material obtainable according to a process according to one of Claims 1 to 17 as an interlining material capable of setting for items of clothing.

## Revendications

1. Procédé destiné au revêtement sous forme de trame, de produits flexibles de grande surface (38) avec des colles fusibles (16), par application de colles fusibles (16) sur un support intermédiaire (12, 14) et transfert de la colle fusible (16) du support intermédiaire (12, 14) sur un support final (18), notamment une étoffe d'entoilage,
caractérisé en ce que la trame d'une couche renfermant de la colle fusible (16) sur le support intermédiaire (12, 14) est pourvue d'une couche supplémentaire (8) qui y est rapportée par-dessus et qui produit l'adhérence au support final (18), cette autre couche n'étant appliquée que sur les sommets des points renfermant de la colle fusible (16), et en ce qu'en guise d'autre couche (8) on utilise un film d'une dispersion ou d'une solution d'une matière plastique ou d'une résine, qui n'est plus thermoactivable dans des conditions de thermocollage, ou bien une solution ou une dispersion qui dans des conditions de fabrication ne condense pas ou n'est pas réticulée, mais ne présentent plus de propriétés de fluidité notables lors du thermocollage des produits flexibles de grande surface revêtus.

2. Procédé selon la revendication 1, caractérisé en ce que la couche (8) renferme des constituants réticulables sur la base de poly(meth)acrylates, polyacétates, polybutadiène-styrènes, polybutadiène-styrène-acrylonitriles, polyacrylonitriles, polyuréthannes, résines urée-formaldéhyde, résines mélamine-formaldéhyde, résines alkyle-urée-formaldéhyde, ou de produits éthérifiés de ceux-ci.

3. Procédé destiné au revêtement sous forme de trame selon l'une des revendications 1 à 2, caractérisé en ce que les points renfermant de la colle fusible (16) mouillés par la couche (8), sur le support intermédiaire (12, 14) sont faiblement pré-séchés avant le transfert sur le support final (18).

4. Procédé destiné au revêtement sous forme de trame selon l'une des revendications 1 à 3, caractérisé en ce que les constituants volatils de la couche (8) sont dans une large mesure ou totalement volatilisés lorsque le support final (18) est retiré du support intermédiaire (12, 14).

5. Procédé destiné au revêtement sous forme de trame selon l'une des revendications 1 à 4, caractérisé en ce qu'un rouleau applicateur (4) est recouvert d'un film fluide d'une épaisseur uniforme de la couche supplémentaire (8), rouleau applicateur dont la masse de film restant sur le rouleau applicateur après mouillage de la trame renfermant de la colle fusible (16), est raclée et est pompée constamment en circuit en passant par un filtre et débarrassée d'éventuelles impuretés.

6. Procédé destiné au revêtement sous forme de trame selon l'une des revendications 1 à 5, caractérisé en ce que la colle fusible de la couche renfermant de la colle fusible (16) est réalisée à base de copolyamides, de copolyesthers, de polyuréthannes ou de polyéthylènes basse pression, ou de mélanges de ceux-ci.

7. Procédé destiné au revêtement sous forme de trame selon l'une des revendications 1 à 6, caractérisé en ce que la colle fusible de la couche renfermant de la colle fusible (16) est dotée d'un agent gonflant.

8. Procédé destiné au revêtement sous forme de trame selon l'une des revendications 1 à 7, caractérisé en ce qu'un cylindre de traction et de refoulement (22) à revêtement adhérent amène le support final (38) revêtu, de manière lâche, à un traitement thermique final.

9. Procédé destiné au revêtement sous forme de trame selon l'une des revendications 1 à 8, caractérisé par les étapes suivantes:
- le sommets des points renfermant de la colle fusible (16) sont plongés, sur un support intermédiaire (12, 14), dans le film destiné à former ladite couche supplémentaire (8) et placé sur un rouleau applicateur (4), et sont mouillés par ce film après leur retrait;
- le support final (18) est déposé sur ce support intermédiaire (12, 14) et est chauffé jusqu'à durcissement de la couche de film (8) sur les points de colle fusible (16) sur le support intermédiaire (12, 14);
- le support intermédiaire (12, 14) est retiré du support final (18), les points renfermant de la colle fusible (16) muni du film (8) étant présents sur le support final (18); et
- en poursuivant l'action de la chaleur, on effectue un traitement postérieur et une agglomération de la couche de colle fusible ayant été mouillée.

10. Procédé destiné au revêtement sous forme de trame selon l'une des revendications 1 à 9, caractérisé en ce que le support intermédiaire est un cylindre chauffant (12) revêtu de caoutchouc aux silicones, ou une bande de support (14) revêtue de caoutchouc aux silicones.

11. Procédé destiné au revêtement sous forme de trame selon l'une des revendications 1 à 10, caractérisé en ce que le revêtement de caoutchouc aux silicones du cylindre chauffant (12) a une épaisseur de 0,5 à 2,0 mm.

12. Procédé destiné au revêtement sous forme de trame selon l'une des revendications 1 à 10, caractérisé en ce que la bande de support (14) revêtue de caoutchouc aux silicones, présente une épaisseur de 0,10 à 0,15 mm.

13. Procédé destiné au revêtement sous forme de trame selon les revendications 10 ou 12, caractérisé en ce que la bande de support (14) forme une boucle et est guidée en révolution.

14. Procédé destiné au revêtement sous forme de trame selon les revendications 10 ou 12, caractérisé en ce que la bande de support (14) possède un début et une fin et est déroulée et enroulée.

15. Procédé destiné au revêtement sous forme de trame selon l'une des revendications 10 à 14, caractérisé en ce que la bande de support (14) est réalisée en un tissu de polyester revêtu de caoutchouc aux silicones ou d'un tissu de matériaux de fibres de renfort à haute résistance à la température, tels que des matériaux de fibres de polyimide, de fibres polyaromatiques, de fibres de verre ou de fibres de carbone.

16. Procédé destiné au revêtement sous forme de trame selon l'une des revendications 1 à 15, caractérisé en ce que la trame de colle fusible (16) est appliquée sur le support intermédiaire (12, 14) par un procédé d'impression à poudre au rouleau gravé en creux, un procédé d'impression à colle fondue au rouleau gravé en creux ou un procédé de sérigraphie.

17. Procédé destiné au revêtement sous forme de trame selon l'une des revendications 1 à 16, caractérisé en ce que la trame de la couche renfermant de la colle fusible (16) appliquée sur le support intermédiaire (14) par voie de sérigraphie, est saupoudrée, avant l'application d'une autre couche (8) et avant le séchage, avec une poudre d'épandage de copolyamides, de copolyester, de polyéthylènes basse pression et/ou de PVC, et l'excédent non adhérent de poudre d'épandage étant retiré.

18. Produit flexible de grande surface, revêtu, pouvant être obtenu d'après un procédé selon l'une des revendications 1 à 17.

19. Utilisation du produit flexible de grande surface, revêtu, pouvant être obtenu d'après un procédé selon l'une des revendications 1 à 17, en tant qu'étoffe d'entoilage pouvant être thermocollée, pour des pièces de vêtements.
